# EUROPÄISCHE PATENTANMELDUNG

(11) **EP 0 990 622 A2**
(43) Veröffentlichungstag der Anmeldung: **05.04.2000**
(21) Anmeldenummer: 99250280.7
(22) Anmeldetag: 19.08.1999
(51) Int. Cl.: C02F 9/14, C02F 9/02, C02F 1/24, C02F 1/465

(54) **Verfahren und Vorrichtung zur biologischen Reinigung von Abwasser**

(30) Priorität: 30.09.1998 DE 19845808
(71) Anmelder: Wilk, Bernd-Ulrich, 12559 Berlin (DE); Bräunlich, Ursula, 04416 Markkleeberg (DE)
(72) Erfinder: Wilk, Bernd-Ulrich, 12559 Berlin (DE); Bräunlich, Ursula, 04416 Markkleeberg (DE)
(74) Vertreter: Buczor, Monika

(57) **Zusammenfassung**

Die Erfindung betrifft ein Verfahren und eine Vorrichtung zum Reinigen von Abwasser insbesondere von wäschereispezifischem Abwasser zwecks Wiederverwendung.

Aufgabe: Hoher Reinheitsgrad bei geringen Wasserverlusten und Regenerationszeiten.

Die Aufgabe wird gelöst, in dem dem Bioreaktor eine Flotation nachgeordnet oder vor- und nachgeordnet wird. Dabei kommen eine Elektroflotation mit einer Anode aus titanbeschichtetem V4A-Stahl und einer Katode aus V4A-Stahl oder eine Druckentspannungsflotation, die aus mehreren, miteinander kommunizierenden Kammern besteht und in deren Flotationskammer durch unterschiedliche Pumpenleistungen und Förderungszeiten Ruhe- und Absetzphasen und Schlammablaufphasen entstehen, zum Einsatz. Der nachgeordneten Flotation werden ein primäres kationaktives sauer reagierendes Fällungsmittel und ein sekundäres polymeres anionaktives Flockungshilfsmittel zugesetzt. Zum Animpfen des Bioreaktors werden wärme- und desinfektionsmittelbeständige Mikroorganismen, die bereits mit Nährstoffen versehen sind, eingesetzt. Es stellt sich eine spezielle Mischbiozönose auf die jeweils konkreten Bedingungen von selbst ein.

## Beschreibung

Die Erfindung betrifft ein Verfahren und eine Vorrichtung zur biologischen Reinigung von Abwasser, insbesondere von wäschereispezifischem Abwasser zwecks Wiederverwendung desselben.

Aus der DE-PS 44 07 734 ist ein Verfahren zur Reinigung und Wiederverwendung von tensidhaltigen Abwässern bekannt, bei dem das wäschereispezifische Abwasser von größeren Schmutzteilchen mittels eines Filters befreit und zwischengelagert wird. Anschließend gelangt es in einen unter aeroben Bedingungen arbeitenden säulenförmigen Bioreaktor. In diesen wird von unten Luft eingeleitet. Am oberen Ende verläßt das aufbereitete Wasser den Bioreaktor und wird durch eine Aktivkohlesäule, die als Adsorber wirkt, geleitet. Das so gereinigte Wasser wird in einem Stapelbehälter für die Wiederverwendung in der Wäscherei bereitgehalten.

Diese Erfindung hat den Nachteil, daß Probleme, wie die Aufsalzung und die Aufhärtung nicht abschließend gelöst wurden, die Entsorgung der beladenen Aktivkohle aus ökologischer und ökonomischer Sicht bedenklich ist und das Verzichten auf eine Nachklärung durch das Rückspülen des Bioreaktors ausgeglichen werden soll. Mit zunehmender Betriebsdauer ist ein Absinken der biologischen Leistungsfähigkeit des Bioreaktors auf Grund der abgestorbenen Biomasse auf der Aufwuchsfläche zu verzeichnen. Der Spülvorgang bedingt ein erneutes Anfahren bzw. die Gefahr eines zu hohen Biomasseaustrages. Die Verfügbarkeit der Anlage verringert sich dadurch deutlich. Die Anlage reagiert sensibel auf Temperaturschwankungen, Stoßbelastung und Waschmittelzusammensetzung, wodurch trübes Wasser entstehen kann.

Aus den DE-OS 32 22 590, 32 29 960 und 35 43 432 ist die biologische Reinigung von kommunalem Abwasser unter Verwendung der Flotation zur Abtrennung der Biomasse in der Vor- und/oder Nachklärung bekannt.

Diese Erfindungen haben den Nachteil, daß sie für die Reinigung von wäschereispezifischen Abwässern zwecks Wiederverwendung derselben in der Wäscherei ungeeignet sind, da durch die Flotation nur die Biomasse zurückgewonnen wird und kein absolut klares Wasser entsteht.

Der Erfindung liegt die Aufgabe zugrunde, ein Verfahren und eine Vorrichtung zu entwickeln, mit denen insbesondere wäschereispezifische Abwässer mittels einer Kombination von biologischen und mechanischen Verfahren nahezu vollständig, unter Entfernung kleinster Teilchen bis zu 0,1 µm, bei nur geringen Wasserverlusten und kurzen Regenerationszeiten der Anlage, ökonomisch günstig gereinigt werden und somit erneut als Prozeßwasser in der Wäscherei einsetzbar sind.

Erfindungsgemäß wird die Aufgabe durch die Merkmale der Patentansprüche gelöst. Dem Bioreaktor wird eine Flotation nachgeordnet bzw. vor- und nachgeordnet. Diese Flotation steht mit der biologischen Reinigung und der Absonderung des Belebtschlammes nicht im Zusammenhang. Die nachgeordnete Flotation dient ausschließlich der Absonderung kleinster Teilchen, die als Emulsion noch im bereits biologisch gereinigten Wasser vorhanden sind. Durch die Zugabe eines primären kationaktiven Fällungsmittels und danach eines sekundären polymeren anionaktiven Flockungshilfsmittels werden Teilchen bis zu einer Größe von 0,1 µm entfernt. Die Flotation wird im leicht sauren Bereich bei einem PH-Wert zwischen 6,0 und 6,8 durchgeführt. Bei diesem PH-Wert werden die besten Fällungsergebnisse erzielt. Die Einstellung des PH-Wertes erfolgt vorteilhafterweise durch das sauer reagierende primäre kationaktive Fällungsmittel. Es ist jedoch auch möglich, durch andere geeignete Chemikalien wie Säuren den PH-Wert zu regulieren.

Ist dem Bioreaktor in einer anderen Ausführungsform noch eine Flotation vorgeschaltet, dann wird nur der Schlamm aus dieser Flotation biologisch im Bioreaktor gereinigt. Der nachgeordneten Flotation werden in diesem Fall das Wasser aus der ersten Flotation und das dem Schlamm entzogene Wasser aus dem Bioreaktor zugeführt.

Als Flotation wird eine Elektroflotation oder eine Druckentspannungsflotation eingesetzt. In dem Anwendungsfall in dem zwei Flotationen eingesetzt werden, besteht die Möglichkeit, die gleiche Flotationsart oder unterschiedliche Flotationsarten anzuwenden.

Verwendet man die Elektroflotation, so bestehen Anode und Katode aus inertem Material. Vorteilhafterweise kommen eine Anode aus titanbeschichtetem V4A-Stahl und eine Katode aus V4A-Stahl zum Einsatz. Wird eine Reinigung der Elektroden erforderlich, so geschieht das durch Umpolen derselben.

Die Elektroflotation besteht aus dem Elektrolyseur mit den Elektroden, in den das primäre kationaktive sauer reagierende Fällungsmittel dosiert eingeleitet wird. Die Dosierung erfolgt PH-abhängig. Im Elektrolyseur entsteht neben Wasserstoff und molekularem Sauerstoff Ozon. Dieses Ozon zerstört auf Grund seiner Aggressivität Keime und Gerüche im Wasser, so daß auf eine Desinfektion des Reinwassers sowie den Durchlauf desselben durch einen Aktivkohlefilter verzichtet werden kann. Dem Elektrolyseur folgt eine Beruhigungskammer, in der die eigentliche Fällung der Teilchen, die die Wassertrübung hervorrufen, erfolgt. An die Beruhigungskammer schließt sich der Dekanter an. Vor dem Eintritt in den Dekanter wird das sekundäre polymere anionaktive Flockungshilfsmittel zugesetzt, das zu einer Ausflockung des schwimmfähigen Schlammes führt, der dann oben abgezogen wird.

Aus dem Dekanter wird das Wasser unten abgezogen und in Nachtrennkammern gebracht, woraus schließlich das Reinwasser abgeleitet wird. Der Einsatz der soeben beschriebenen Elektroflotation bewirkt eine sehr gute Wasserqualität. Das schließt aber nicht aus, daß eine Elektroflotation anderer Bauart einsetzbar ist.

Kommt eine Druckentspannungsflotation zum Einsatz, dann wird von unten in die Flotationskammer ein Luft-Wasser-Gemisch eingeleitet. Durch die vom PH-Wert abhängige dosierte Einleitung eines primären kationaktiven Fällungsmittels und, eines sekundären polymeren anionaktiven Flockungshilfsmittels in die Flotationskammer, wie bei der Elektroflotation beschrieben, entsteht in Verbindung mit den die Trübung hervorrufenden, im Wasser emulgierten Teilchen Schlamm, der an die Wasseroberfläche steigt. Die Flotationskammer ist durch wasserundurchlässige Wände von der ihr benachbarten Kammer und der ihr benachbarten Flockungskammer getrennt. Die Wand zur benachbarten Kammer ist die niedrigste Wand in der gesamten Druckentspannungsflotation und dient als Überlauf von der Flotationskammer in die Kammer. Die Wand, die die Kammer vom Überlauf für den Schlamm trennt, ist höher als die eben beschriebene andere Wand der Kammer. Das Wasser fließt über ein Rohrsystem aus dem unteren Bereich der Kammer in den oberen Bereich der Flockungskammer ab, nach dem Prinzip der kommunizierenden Gefäße. Die Flockungskammer ist mit der Reinwasserkammer über Ausnehmungen oder Bohrungen im unteren Bereiche der sie trennenden Wand verbunden. Dort fließt das Reinwasser vom Boden der Flockungskammer in die Reinwasserkammer, aus der es oben abgepumpt wird. Diese Reinwasserpumpe arbeitet in Intervallen und hat eine große Förderleistung. Die Pumpe, die das zu flotierende Wasser in den unteren Bereich der Flotationskammer pumpt, arbeitet kontinuierlich und hat eine kleine Förderleistung. Bei abgeschalteter Reinwasserpumpe steigt der Wasserspiegel in der Flotationskammer, das Wasser läuft über die niedrigste Wand des Systems in die Kammer. Nun steigt der Wasserspiegel weiter in der Flotationskammer und der Kammer, bis er den Überlauf über die Wand zwischen Kammer und Ablauf erreicht hat. Jetzt läuft der Schlamm über diese Wand in den Ablauf. Ist der größte Teil der Schlammschicht abgelaufen, schaltet die Reinwasserpumpe ein und zieht in kleiner Zeiteinheit eine große Menge Reinwasser ab. Das hat zur Folge, daß der Wasserspiegel in den kommunizierenden Gefäßen, also in allen Kammern sinkt, bis er unter dem Überlauf der Wand zwischen Flotationskammer und Kammer angekommen ist. Nun schaltet die Reinwasserpumpe ab. In der Flotationskammer hat jetzt der Schlamm Zeit sich an der Oberfläche zu sammeln, bis er wieder in die Kammer überläuft.

Bei einem Abwasseranfall bis zu 15 m³ pro Tag kommt als Bioreaktor vorteilhafterweise ein Batchreaktor zum Einsatz, d.h. man arbeitet nach der Zeitachse. Ist der Abwasseranfall größer, dann ist es günstiger nach der Fließachse zu arbeiten. Es hat sich als vorteilhaft erwiesen, einen mehrstufigen Bioreaktor einzusetzen.

Zum Animpfen benutzt man desinfektionsmittelbeständige Mikroorganismen, die bereits mit Nährstoffen versehen sind. Die spezielle Mischbiozönose stellt sich auf die konkreten Bedingungen von selbst ein. Vorzugsweise verwendet man zum Animpfen Abwässer industrieller Melkanlagen, die mit Milchresten, Tensiden und tierischen Exkrementen versehen sind und in den sich bereits entsprechende Mikroorganismen gebildet haben. Ein Nachimpfen sowie Nährstoffzugaben sind bei ungestörten biologischen Vorgängen im Bioreaktor nicht erforderlich. Sie sind nur beim Anfahren oder erneutem Anfahren des Bioreaktors von Nöten. Der Trockensubstanzgehalt des beschriebenen Belebtschlammes liegt zwischen 4,5 und 8 kg TS/ m³. Jeder Stufe des Bioreaktors ist eine separat ansteuerbare Injektorbelüftung zugeordnet, so daß ein Zu- und Abschalten der einzelnen Injektorbelüftungen lastabhängig, d.h. entsprechend des speziellen Sauerstoffbedarfes in den einzelnen Stufen erfolgt.

Das Reinwasser wird kontinuierlich enthärtet.

Mit dieser Erfindung wird ein außerordentlich hoher Umsatz des Reinwassers von 75% bis 93 % erreicht.

Die Erfindung soll nachfolgend an einem Ausführungsbeispiel näher erläutert werden. In der Zeichnung zeigen:

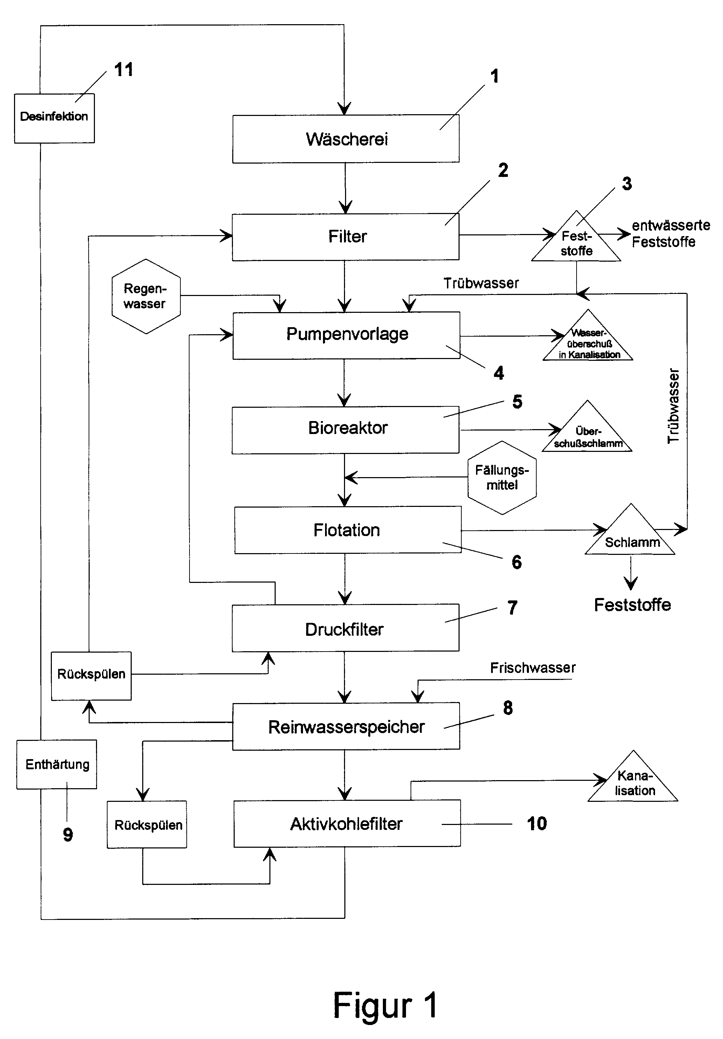

- Fig. 1:: Die Fließlinie des Arbeitsverfahrens,
- Fig. 2:: Die Fließlinie des Arbeitsverfahrens mit der biologischen Reinigung in der Nebenlinie,
- Fig. 3:: Die Elektroflotationsanlage und

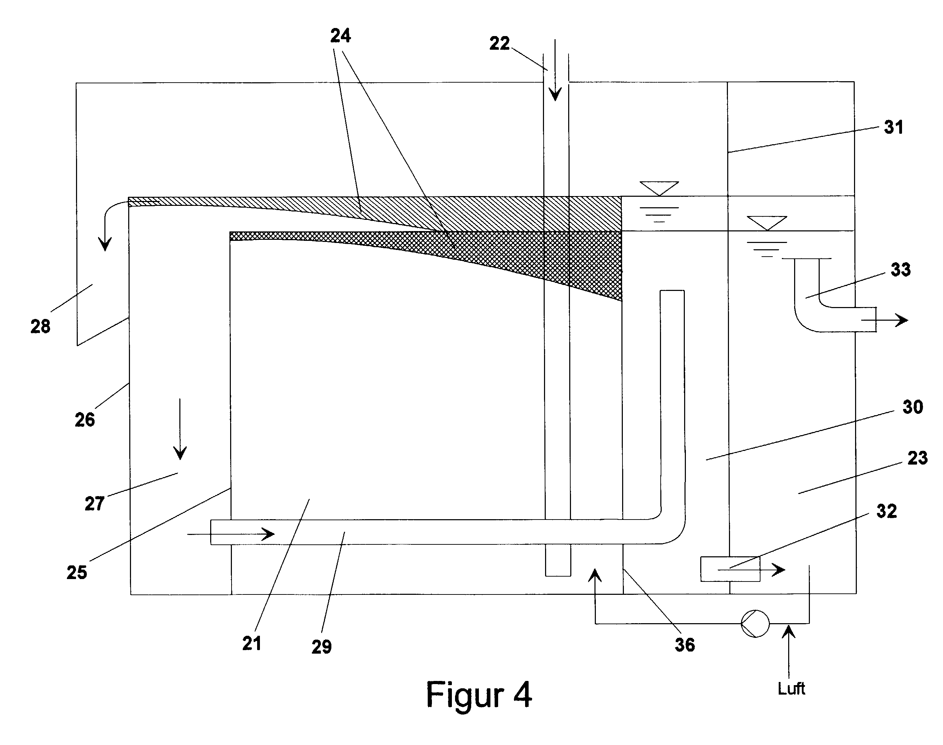

- Fig. 4:: Die Druckentspannungsflotationsanlage.

Im Ausführungsbeispiel wird die Reinigung von wäschereispezifischen Abwässern dargelegt, unter Einsatz einer hier nicht beschriebenen Mischbiozönose.

Die aus der Wäscherei 1 kommenden Abwässer, die stark tensidhaltig sind, werden durch einen Filter 2, der vorzugsweise ein Bogensieb ist, geleitet. In dem Filter 2 werden Feststoffe 3 bis zu einer Teilchengröße von ca. 280 µm separiert und zum Beispiel durch Abtropfen oder eine andere Entwässerungsart nochmals entwässert. Das daraus gewonnene Trübwasser gelangt zusammen mit dem Wasser aus dem Filter 2 und einer geringen Menge Frisch- oder vorzugsweise Regenwasser dosiert zum Ausgleich der Wasserverluste in die Pumpenvorlage 4. Die Pumpenvorlage 4 ist kein Speicherbecken im herkömmlichen Sinn, sondern faßt nur geringe Mengen Wasser, die zum kontinuierlichen Pumpenbetrieb beim Beschicken des Bioreaktors 5 erforderlich sind.

Der Bioreaktor 5 ist der Größe und der Bauart der Wäschereianlagen angepaßt. Bei kleinen Wäschereianlagen mit geringem Wasseranfall wird aus ökonomischen Gründen als Bioreaktor 5 ein Batchreaktor eingesetzt, der diskontinuierlich nach der Zeitachse arbeitet. Bei größeren Wäschereianlagen ist es günstig, einen mehrstufigen Bioreaktor 5 zu verwenden, der kontinuierlich nach der Fließachse arbeitet. Vorteilhafterweise erfolgt die biologische Reinigung in zwei bis fünf Stufen, je nach Schmutzfracht. Alle Stufen sind als Belebtschlammanlage ausgebildet.

Nach Animpfen mit desinfektionsmittelstabilen Mikroorganismen entwickelt sich eine spezielle Mischbiozönose. Ein Nachimpfen ist bei ungestörtem Ablauf nicht erforderlich.

Der Belebtschlamm weist einen Trockensubstanzgehalt von 4,5 bis 8 kg TS/m³ auf. Eine Nährstoffzugabe ist nicht erforderlich. Die Menge Sauerstoff, die zum Leben und zur Vermehrung der Mikroorganismen erforderlich ist, wird in den Bioreaktor 5 eingeleitet. Dabei wird jede Stufe des Bioreaktors 5 mittels Injektionsbelüftung getrennt angesteuert, so daß es möglich ist, je nach Bedarf, unterschiedliche Sauerstoffmengen in Form von Luft einzutragen.

Nach der letzten biologischen Reinigungsstufe weist das gereinigte Wasser noch eine Suspension von Teilchen über 0,1 µm auf, die zu einer Trübung führen. Deshalb durchläuft das Wasser nach dem Bioreaktor 5 eine Flotation 6. Diese Flotation 6 ist gemäß einer Variantenlösung eine Elektroflotation und in der anderen Variantenlösung eine Druckentspannungsflotation. Der Flotation 6 wird ein primäres kationaktives Fällungsmittel zugegeben, das in der Flotation 6 einen schwach sauren PH-Wert von 6,0 bis 6,8 einstellt. Nach dem sich durch das primäre Fällungsmittel eine lockere Ausfällung der Teilchen ergeben hat, wird ein sekundäres polymeres Flockungshilfsmittel zugegeben. Durch sein anionaktives Verhalten bilden sich nun große Flocken. Die günstigste Anwendung beträgt bei dem primären kationaktiven Fällungsmittel 0,6 bis 1,3 mg/l und bei dem sekundären anionaktiven Flockungshilfsmittel 0,002 bis 0,0029 mg/l. Der aus der Flotation 6 ausgetragene Schlamm wird entwässert und das Wasser daraus der Pumpenvorlage 4 zugeführt. Das die Flotation 6 verlassende klare Wasser gelangt über einen Druckfilter 7, vorzugsweise einen Kiesfilter, in dem vereinzelte noch vorhandene Teilchen zurückgehalten werden, in den Reinwasserspeicher 8. Dort werden geringe Wasserverluste aus der Wäscherei 1 durch Frischwasserzulauf ausgeglichen.

Das biologisch und chemisch-physikalisch gereinigte Abwasser wird vor der Wiederverwendung in der Wäscherei 1 mittels einer Enthärtung 9 von den durch den Waschprozeß, den Schmutz sowie das Waschmittel in das System eingetragenen Härtebildnern befreit.

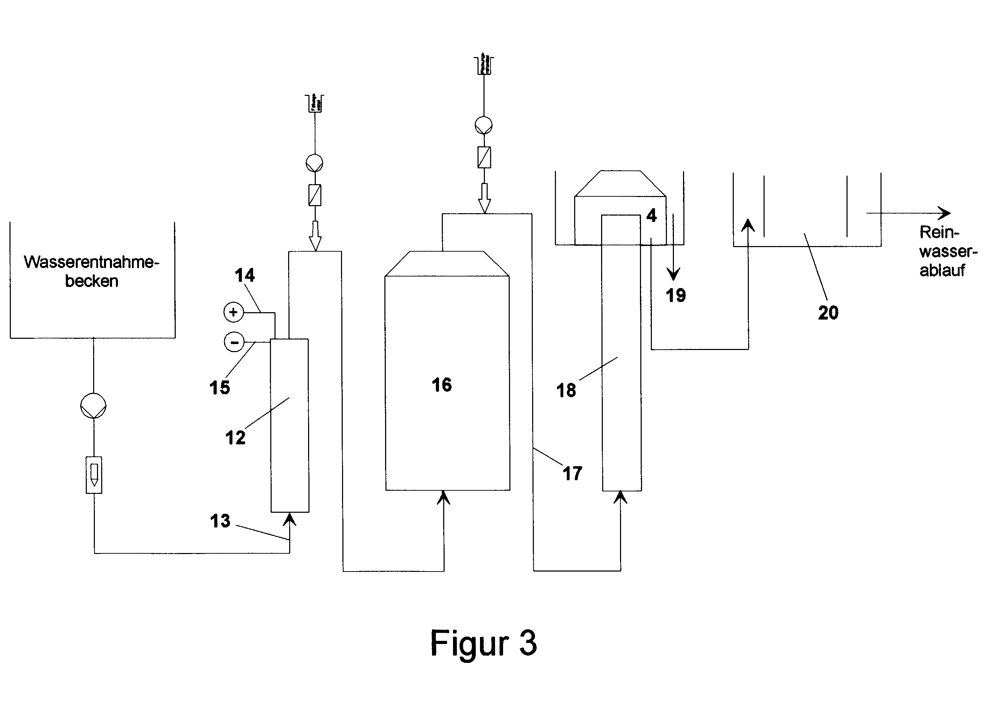

Setzt man als Flotation 6 die Elektroflotation gemäß Fig. 3 ein, so ist ein Aktivkohlefilter 10 sowie eine Desinfektion 11 z.B. mit UV-Strahlen nicht erforderlich. Verwendet wird eine Elektroflotation, bei der dem Elektrolyseur 12 mit der Anode 14 und der Katode 15 das Wasser aus dem Bioreaktor 5 und das primäre kationaktive Fällungsmittel über eine Leitung 13 zugeführt werden. Die Anode 14 besteht aus inertem Material vorzugsweise titanbeschichtetem V4A-Stahl. Die Katode 15 ist aus V4A-Stahl gefertigt. Das aus dem Bioreaktor 5 kommende Wasser wird mit einem kationaktiven Fällungsmittel versetzt und unter elektrolytischen Bedingungen flocken die im Wasser befindlichen Teilchen bis zu einer Größe von 0,1 µm aus. Außerdem bilden sich im Elektrolyseur 12 molekularer Sauerstoff, Wasserstoff und geringe Mengen Ozon. Letzteres hat eine starke Desinfektionswirkung, so daß eine weitere Desinfektion des Reinwassers nicht mehr erforderlich ist. Das Wasser mit den ausgeflockten Substanzen durchfließt eine Beruhigungskammer 16, wo sich kleine Schlammflocken bilden und gelangt, unter Zusatz eines sekundären polymeren anionaktiven Flockungshilfsmittels über eine Leitung 17 in den Dekanter 18. Hier wird der großflockige, schwimmfähige Schlamm 19 oben abgezogen. Das Wasser wird unten abgeleitet und gelangt in Nachtrennkammern 20, die eine weitere Trennung von Flocken und Klarwasser bewirken. Aus der letzten Kammer wird das Reinwasser dem Druckfilter 7 zugeführt. Die Rückstände aus der ersten Kammer werden zurück in den Elektrolyseur 12 gepumpt. Für die Zugabe des primären Fällungsmittels und des sekundären Flockungshilfsmittels sind je eine Dosierpumpe angeordnet. Außerdem wird der PH-Wert ständig überwacht und die Dosierpumpe für das primäre Fällungsmittel nach den Meßwerten des PH-Wertes angesteuert.

Bei der Lösungsvariante einer Druckentspannungsflotation schließen sich an den Reinwasserspeicher 8 ein Aktivkohlefilter 10 und eine Desinfektion 11, vorzugsweise eine UV-Desinfektion an.

Die Druckentspannungsflotation besteht aus einer Flotationskammer 21, in die über einen Zulauf 22 das aus dem Bioreaktor 5 kommende, noch trübe Wasser eingepumpt wird. Dieser Vorgang erfolgt kontinuierlich. Diesem Wasser wird, wie oben bereits beschrieben, dosiert ein primäres kationaktives Fällungsmittel und ein sekundäres polymeres anionaktives Flockungshilfsmittel zugesetzt. Von unten wird in die Flotationskammer 21 ein Gemisch aus Luft und einer kleinen Menge Reinwasser aus der Reinwasserkammer 23 eingetragen. Unter diesen Bedingungen flocken die das Wasser trübenden, bis zu 0,1 µm kleinen Teilchen aus und setzen sich oben als Schlamm 24 ab. Dadurch, daß die Wand 25 niedriger als die Wand 26 ist, sammelt sich der Schlamm 24 bei kontinuierlichem Wasserzulauf in der Flotationskammer 21 an der Wand 26 und kann erst in den Ablauf 28 abfließen, wenn er ihr Niveau überragt. Das Reinwasser läuft in die Kammer 27 und von dort über das Rohr 29, das durch die Wand 36 geführt ist, in den oberen Bereich der Nachflockungskammer 30. Hier werden Restflocken abgeschieden.

Über öffnungen 32 in der Wand 31 gelangt das Reinwasser aus der Nachflockungskammer 30 in die Reinwasserkammer 23. Dort wird es durch eine schnell fördernde Pumpe über das Rohr 33 in Intervallen abgezogen. Da alle Kammern 21; 23; 27 und 30 untereinander verbunden sind und somit wie kommunizierende Gefäße reagieren, stellt sich in ihnen der gleiche Pegelstand ein, so daß mit dem schnellen Abzug des Reinwassers aus der Reinwasserkammer 23 auch der Pegel in der Flotationskammer 21 sinkt. Die Wassermenge aus dem Zulauf 22 läßt das Wasser in der Flotationskammer 21 langsam steigen, so daß in dieser eine gewisse Ruhe zwecks Ansammeln des Schlammes 24 an der Oberfläche eintritt.

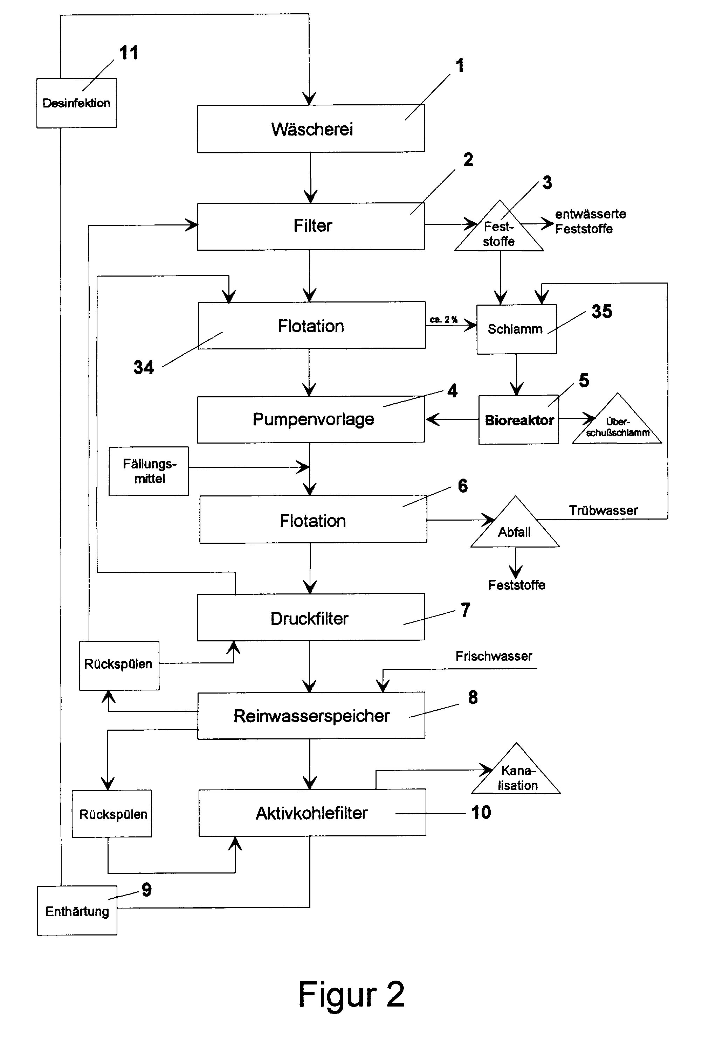

In einer anderen Lösungsvariante gemäß Fig. 2 ist zwischen Filter 2 und Bioreaktor 5 bzw. Pumpenvorlage 4 eine weitere Flotation 34 geschaltet, die entweder eine Druckentspannungs- oder eine Elektroflotation ist. Das die Flotation 34 verlassende Wasser gelangt direkt zur Pumpenvorlage 4 und von dort zur Flotation 6. Der Schlamm 35, der aus der Flotation 34 abgesondert wird, zusammen mit dem Trübwasser der Feststoffe aus dem Filter 2 werden in dem Bioreaktor 5 geleitet und dort behandelt. Der Überschußschlamm aus dem Bioreaktor 5 wird entfernt und das Wasser aus demselben der Pumpenvorlage 4 zugeführt.

Bei allen Lösungsvarianten werden in gewissen Zeitabständen mit Wasser aus dem Reinwasserspeicher 8 der Filter 2 der Druckfilter 7 und so vorhanden, der Aktivkohlefilter 10 rückgespült.

Aufstellung der verwendeten Bezugszeichen zur Erfindung "Verfahren und Vorrichtung zur biologischen Reinigung von Abwasser"
- 1: Wäscherei
- 2: Filter
- 3: Feststoffe
- 4: Pumpenvorlage
- 5: Bioreaktor
- 6: Flotation
- 7: Druckfilter
- 8: Reinwasserspeicher
- 9: Enthärtung
- 10: Aktivkohlefilter
- 11: Desinfektion
- 12: Elektrolyseur
- 13: Leitung
- 14: Anode
- 15: Katode
- 16: Beruhigungskammer
- 17: Leitung
- 18: Dekanter
- 19: Schlamm
- 20: Nachtrennkammer
- 21: Flotationskammer
- 22: Zulauf
- 23: Reinwasserkammer
- 24: Schlamm
- 25: Wand
- 26: Wand
- 27: Kammer
- 28: Ablauf
- 29: Rohr
- 30: Nachflockungskammer
- 31: Wand
- 32: Öffnung
- 33: Rohr
- 34: Flotation
- 35: Schlamm
- 36: Wand

## Patentansprüche

1. Verfahren zur biologischen Reinigung von Abwasser insbesondere von wäschereispezifischem Abwasser unter Verwendung eines Filters zur Feststoffabtrennung und eines Bioreaktors, dadurch gekennzeichnet, daß
dem Bioreaktor eine mit dessen Wirkungsweise, nämlich der biologischen Reinigung nicht ursächlich im Zusammenhang stehende Flotation nachgeordnet oder vor- und nachgeordnet wird
und zum Animpfen wärme- und desinfektionsmittelbeständige Mikroorganismen, die bereits mit Nährstoffen versehen sind, eingesetzt werden und sich eine spezielle Mischbiozönose auf die jeweils konkreten Bedingungen von selbst entwickelt
und das Reinwasser kontinuierlich enthärtet wird.

2. Verfahren nach Anspruch 1, dadurch gekennzeichnet, daß als Flotation eine Elektroflotation oder eine Druckentspannungsflotation eingesetzt wird, wobei aus dem Wasser Teilchen bis zu einer Größe von 0,1 µm entfernt werden.

3. Verfahren nach Anspruch 1 und 2, dadurch gekennzeichnet, daß der dem Bioreaktor nachgeordneten, mit dem biologisch gereinigten Wasser beschickten Flotation zuerst ein als primäres Fällungsmittel fungierendes kationaktives Fällungsmittel und im geringen Zeitabstand danach ein sekundäres polymeres anionaktives Flockungshilfsmittel zugesetzt wird, und daß in der dem Bioreaktor nachgeordneten Flotation ein PH-Wert zwischen 6,0 und 6,8 eingestellt wird wobei zur Einstellung des PH-Wertes das primäre kationaktive Fällungsmittel verwendet wird.

4. Verfahren nach Anspruch 1, dadurch gekennzeichnet, daß sich bei der Elektroflotation im biologisch gereinigten Wasser molekularer Sauerstoff, Wasserstoff und Ozon bilden und das Ozon während der Elektroflotation als Desinfektionsmittel verwendet wird, und daß beim Einsatz der Druckentspannungsflotation das Reinwasser durch UV-Bestrahlung desinfiziert wird.

5. Verfahren nach Anspruch 1, dadurch gekennzeichnet, daß zum Animpfen des Bioreaktors Abwasser von industriellen Melkanlagen, das mit Milchresten, Tensiden und Exkrementen versehen ist und in dem sich entsprechende Mikroorganismen gebildet haben, eingesetzt wird, und daß der Belebtschlamm einen Trockensubstanzgehalt zwischen 4,5 und 8 kg TS/m³ aufweist.

6. Verfahren nach Anspruch 1, dadurch gekennzeichnet, daß bei einer Leitfähigkeit von > 6.000 µS/cm ein Teil des Wassers im Kreislaufsystem ausgetauscht bzw. durch eine externe Entsalzung wie Umkehrosmose auf ca. 2.500 µS/cm reduziert wird.

7. Verfahren nach Anspruch 1, dadurch gekennzeichnet, daß der Umsatzgrad des Reinwassers 75 bis 93 % beträgt.

8. Vorrichtung zur biologischen Reinigung von Abwasser, insbesondere von wäschereispezifischem Abwasser, dadurch gekennzeichnet, daß
dem Abwasser ein Filter (2) zum Abtrennen der Feststoffe (3) bis zu einer Größe von ca. 280 µm zugeordnet ist und
dem Filter (2) ist eine Pumpenvorlage (4) nachgeordnet, deren Pumpe das gefilterte Trübwasser in den nachgeordneten Bioreaktor (5) fördert, der bei einem Abwasseranfall bis ca 15 m³ pro Tag ein Batchreaktor ist und bei einem größenen Abwasseranfall als mehrstufiger Reaktor ausgebildet ist, und
dem Bioreaktor (5) ist eine Flotation (6), die eine Elektroflotation oder eine Druckentspannungsflotation ist, nachgeschaltet, der ein Druckfilter (7) und ein Reinwasserspeicher (8) nachgeordnet sind.

9. Vorrichtung nach Anspruch 8, dadurch gekennzeichnet, daß zwischen Filter (2) und Pumpenvorlage (4) eine weitere Flotation (34), die eine Elektroflotation oder eine Druckentspannungsflotation ist, zwischengeordnet ist, deren abgesondertem Schlamm (35) der Bioreaktor (5) nachgeordnet ist, wobei der Wasserausgang des Bioreaktors (5) und der Flotation (34) in die Pumpenvorlage (4) eingeleitet sind.

10. Vorrichtung nach Anspruch 9, dadurch gekennzeichnet, daß jeder Stufe des Bioreaktors (5) eine Injektorbelüftung zugeordnet ist und jede Injektorbelüftung unabhängig von den anderen ansteuerbar und entsprechend des Sauerstoffbedarfes in den einzelnen Stufen lastabhängig ab- bzw. zuschaltbar ist.

11. Vorrichtung nach Anspruch 8 und 9, dadurch gekennzeichnet, daß bei der Elektroflotation Anode (14) und Katode (15) aus inertem Material hergestellt sind, dabei ist die Anode (14) aus titanbeschichtetem V4A-Stahl und die Katode (15) aus V4A-Stahl hergestellt.

12. Vorrichtung nach Anspruch 8 und 9, dadurch gekennzeichnet, daß die Druckentspannungsflotation
aus einer Flotationskammer (21), die durch wasserundurchlässige Wände (25) und (36) von der Kammer (27) und der Nachflockungskammer (30) getrennt ist, wobei die Wand (25) als Überlaufwand ausgebildet ist,
sowie der Reinwasserkammer (23), die durch eine im unteren Bereich zum Beispiel mit Bohrungen oder Ausnehmungen versehene, wasserdurchlässige Wand (31) von der Nachflockungskammer (30) getrennt ist und
einem Ablauf (28) für den Schlamm (24), der durch eine im oberen Bereich mit einem Überlauf versehenen Wand (26), die höher ist als die Wand (25), von der Kammer (27) getrennt ist, besteht.

13. Vorrichtung nach Anspruch 12, dadurch gekennzeichnet, daß die Kammer (27) über ein oder mehrere wasserundurchlässige Rohre (29), die in einer Öffnung im unteren Bereich der Wand (25) beginnen, durch die Flotationskammer (21) und die Wand (36) hindurch bis in den oberen Bereich der Nachflockungskammer (30) führen, mit dieser verbunden ist.

14. Vorrichtung nach Anspruch 12, dadurch gekennzeichnet, daß in der Flotationskammer (21) in Bodennähe Öffnungen für das Einbringen eines Luft-Wasser-Gemisches angeordnet sind und ein Zulauf (22) für das aus dem Bioreaktor (5) kommende Wasser im unteren Bereich der Flotationskammer (21) endet.

15. Vorrichtung nach Anspruch 12 bis 14, dadurch gekennzeichnet, daß die Pumpe, die das Reinwasser über das Rohr (33) aus der Reinwasserkammer (23) abzieht, in definierten Intervallen arbeitet und eine wesentlich größere Förderleistung hat, als die kontinuierlich arbeitende Pumpe, die den Zulauf (22) und damit die Flotationskammer (21) mit Wasser aus dem Bioreaktor (5) speist und sich auf Grund dieser unterschiedlichen Förderleistungen und -zeiten der Pumpen das Flüssigkeitsniveau mit dem darauf befindlichen Schlamm (24) in der Kammer (27) und der Flotationskammer (21) zwischen zwei Pegeln einstellt, wobei der untere Pegel der Höhe der Wand (25) entspricht und der obere Pegel der Höhe der Wand (26) und der Schlamm (24) während des unteren Pegelstandes eine Schicht bildet und während des oberen Pegelstandes diese Schicht in den Ablauf (28) abfließt.
